(19) **Europäisches Patentamt**
**European Patent Office**
**Office européen des brevets**

(11) **EP 3 004 479 B1**

(12) **EUROPÄISCHE PATENTSCHRIFT**

(45) Veröffentlichungstag und Bekanntmachung des Hinweises auf die Patenterteilung:
28.10.2020 Patentblatt 2020/44

(21) Anmeldenummer: 14748267.3

(22) Anmeldetag: 27.05.2014

(51) Int Cl.:
*E04B 1/80* (2006.01)    *F16L 59/065* (2006.01)
*E04B 1/76* (2006.01)    *B32B 1/00* (2006.01)
*B32B 5/16* (2006.01)    *B32B 5/18* (2006.01)
*B32B 15/20* (2006.01)    *B32B 27/30* (2006.01)

(86) Internationale Anmeldenummer:
PCT/IB2014/000874

(87) Internationale Veröffentlichungsnummer:
WO 2014/191813 (04.12.2014 Gazette 2014/49)

(54) **FOLIENUMHÜLLTE VAKUUMDÄMMPLATTE**

**FILM-COATED VACUUM INSULATED PANEL**

**PANNEAU D'ISOLATION SOUS VIDE, ENVELOPPÉ PAR UNE FEUILLE**

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 29.05.2013 DE 102013009109

(43) Veröffentlichungstag der Anmeldung:
13.04.2016 Patentblatt 2016/15

(73) Patentinhaber: va-Q-tec AG
97080 Würzburg (DE)

(72) Erfinder: CAPS, Roland
3839 Kleinwallstadt (DE)

(74) Vertreter: **Küchler, Stefan**
**Patentanwalt**
**Färberstrasse 20**
**90402 Nürnberg (DE)**

(56) Entgegenhaltungen:
**JP-A- 2009 168 092     JP-A- 2011 241 988**

• **Ityona Amber: "Experimental determination of the adsorption capacity of synthetic Zeolite A/water pair for solar cooling applications", Journal of Mechanical Engineering Research, vol. 4, no. 4, 1 April 2012 (2012-04-01), XP055364442, DOI: 10.5897/JMER11.080**

## Beschreibung

Die Erfindung richtet sich auf eine folienumhüllte Vakuumdämmplatte mit wenigstens einem inneren Kern, wenigstens einer äußeren, den Kern umgebenden Folie, einer inneren Folie, welche sich zwischen dem inneren Kern und der äußeren Folie befindet, und von der die äußere Folie durch ein Schalenmaterial wenigstens bereichsweise, vorzugsweise allseits abgehoben ist, wobei die innere und/oder äußere Folie als luftdichte Barrierefolie ausgebildet ist.

Evakuierte Dämmkörper weisen einen druckbelastbaren, offenporigen Kern mit niedriger Wärmeleitfähigkeit auf sowie eine rundum geschlossene Hülle aus einer Folie, vorzugsweise aus einer Kunststofffolie, die eine hohe Barrierewirkung gegenüber Gasen und Wasserdampf aufweist. Der Kern ist evakuiert, zumeist auf einen Gasdruck zwischen 0,01 mbar und 5 mbar. Dadurch wird die Wärmeleitfähigkeit des Restgases innerhalb des porösen Kerns auf ein Minimum reduziert. Je nach Kernmaterial liegt die Wärmeleitfähigkeit im evakuierten Zustand zwischen 0,0015 und 0,010 W/mK. Gebräuchliche Kernmaterialien sind Pulver, offenporige Schäume, Glasfasern oder Aerogele. Schäume, Glasfasern oder Pulver liegen meist in Plattenform vor, die auf die gewünschte Größe zugeschnitten werden, mit einer Hochbarrierefolie umhüllt und in einer Vakuumkammer luftleer gepumpt werden.

Aus Dokument JP2011241988 ist eine Folienumhüllte Vakuumdämmplatte mit einem inneren Kern und einer äußeren, den Kern umgebenden Folie bekannt. Die Vakuumdämmplatte weist weiterhin eine innere Folie auf, welche sich zwischen dem inneren Kern und der äußeren Folie befindet, wobei die äußere Folie als luftdichte Barrierefolie ausgebildet ist. Sie weist weiterhin ein Schalenmaterial auf, welches die äußere Folie von der inneren Folie allseits abhebt.

Einen Aufbau mit einem inneren Kern und einer diesen umgebenden Schale, die von dem inneren Kern durch eine innere Folie getrennt ist, lässt sich auch der WO 03/002828 A1 entnehmen.

Eine dabei verwendete Hochbarrierefolie kann aus mehreren, aneinander laminierten Folienschichten bestehen, bspw. aus Polyester und Polyethylen, wobei einzelne Schichten zusätzlich mit einer metallischen Schicht bedampft sein können, um eine hohe Diffusionssperre gegen das Eindringen von Gasen und Wasserdampf zu erreichen. Dabei hat sich jedoch herausgestellt, dass eine Hochbarrierefolien meistens nicht als Sperre gegen alle Arten von Gasen oder Dämpfen gleichermaßen dienen kann, sondern bestimmte Arten von Gas oder Dampf besser absperrt, andere weniger gut. Ein großes, bisher ungelöstes Problem ist dabei die gleichzeitige Absperrung von Luft und deren Gasbestandteilen wie Sauerstoff, Stickstoff, etc. einerseits und Wasserdampf andererseits.

Aus den Nachteilen des beschriebenen Standes der Technik resultiert eine die Erfindung initiierende Aufgabenstellung, einen gattungsgemäßen Vakuumdämmkörper derart weiterzubilden, dass dieser gegen alle in der Praxis relevanten Arten von Gas und Dampf gleichermaßen beständig ist, d.h., dessen Eindringen zuverlässig verhindert.

Dieses Problem wird erfindungsgemäß durch eine folienumhüllte Vakuumdämmplatte nach Anspruch 1 gelöst, und die Lösung gelingt insbesondere dadurch, dass

a) zumindest die innere Folie wenigstens eine Lage aus einem Ethen-Vinylalkohol-Copolymer aufweist, bevorzugt metallisiert, insbesondere mit einem Permeationswert bei Standardbedingungen (23 °C, relative Luftfeuchtigkeit 50 % außen) von 0,003 $cm^3/(m^2 \cdot d)$ oder weniger,

b) wobei das Schalenmaterial ein Trocknungsmittel aufweist, welches in einer Flächendichte von wenigstens 100 $g/m^2$, bezogen auf die Grundfläche der Vakuumdämmplatte, vorhanden ist und dessen Wasserdampf-Adsorptionsisotherme $\theta_{H2O} = \theta_{H2O}(p_{H2O})_{T=23°C}$ bei einer Temperatur T = 23 °C und bei niedrigen Partialdrucken $p_{H2O}$ unterhalb des Sättigungsdampfdrucks $p_{H2O,Sätt}$ bei der Temperatur T = 23 C und bei einem gesamten Luftdruck p entsprechend dem atmosphärischen Druck p = $p_{atm}$: $p_{H2O} < p_{Sätt}$ minorisieren lässt durch eine Langmuir-Kurve $\theta_{H2O,L}$ gemäß der Formel

$$\theta_{H2O} = \theta_{H2O}(p_{H2O})|_{T=23°C} \geq \theta_{H2O,L} = K_L * p_{H2O} / [1 + K_L * p_{H2O}],$$

wobei $p_{H2O}$ der Wasserdampf-Partialdruck ist, und $\theta_{H2O} = q/q_{max}$ der Anteil der Wasserdampfaufnahme $q = m_{H2O}/m_{TM}$, bezogen auf die maximale Wasserdampfaufnahmekapazität $q_{max} = m_{H2O,max}/m_{TM}$ des Materials bei der Temperatur T = 23 °C und bei atmosphärischem Luftdruck $p_{atm}$, und wobei die Langmuir-Konstante $K_L = 10^2$ $bar^{-1}$ ist oder größer, vorzugsweise $K_L = 10^3$ $bar^{-1}$ oder größer, insbesondere $K_L = 10^4$ $bar^{-1}$ oder größer.

Indem eine Struktur mit zwei Folien verwendet wird, welche durch ein Schalenmaterial zumindest bereichsweise voneinander getrennt sind, erhält man einerseits eine zweistufige Abschottung, wobei die innere Folie zunächst nahezu drucklos bleibt, solange die äußere Folie nicht von einem Gas oder Dampf durchdrungen wird. Doch selbst wenn dies geschieht, steigt die Druckdifferenz an der Innenfolie zunächst kaum und dann erst allmählich an, weil die äußere von der inneren Folie zumindest bereichsweise abgehoben ist und aus diesem Grund ein Aufnahmevolumen vorhanden ist mit einem zunächst bereichsweise leeren Raum im Bereich des Schalenmaterials, der eine vergleichsweise große Gasmenge zur Füllung benötigt und also einen schnellen Druckanstieg in dem Zwischenraum verhindert. Dabei kann die innere Folie mit wenigstens einer Lage aus einem Ethen-Vinylalkohol-Copolymer auf verschiedene Dichtigkeitswerte für unterschiedliche Gase und/oder Dämpfe eingestellt werden. Dabei erweist es sich jedoch als schwer oder kaum möglich, die innere Folie für die Gase in der Luft - also Stickstoff $N_2$, Sauerstoff $O_2$, Wasserstoff $H_2$, den Edelgasen wie Argon Ar, Neon Ne, Helium He und Krypton Kr sowie Kohlendioxid $CO_2$ und Methan $CH_4$ - gleichermaßen dicht einzustellen wie auch für Wasserdampf $H_2O$. Zumeist geht eine gute Dichtigkeit gegenüber den erstgenannten Gasen mit einer verminderten Dichtigkeit gegenüber Wasserdampf einher. Die doppelte Folienstruktur der Erfindung lässt sich vorteilhaft verwenden, um den Wasserdampf von der inneren Folie so weit als möglich fern zu halten. Dazu kann einerseits vorgesehen sein, für die äußere Folie ein Material zu verwenden, welches gerade gegenüber Wasserdampf eine gute bis hervorragende Dichtigkeit aufweist. Allerdings lässt sich eine hundertprozentige Dichtigkeit nicht erreichen. Die Erfindung sieht daher als zweite Maßnahme vor, trotz aller Vorkehrungsmaßnahmen in den Raum zwischen den beiden Folien eingedrungenen Wasserdampf durch ein Trockenmittel zu adsorbieren und dadurch den Wasserdampf-Partialdruck $p_{H2O,2}$ in dem Zwischenraum zwischen den beiden Folien so lange als möglich bei niedrigen Werten von 1 mbar oder weniger zu halten, beispielsweise bei Werten von 0,5 mbar oder darunter, bevorzugt bei Werten von 0,2 mbar oder darunter, insbesondere bei Werten von 0,1 mbar oder darunter, so dass diese niedrige Wasserdampf-Partialdruckdifferenz $\Delta p_{H2O} = p_{H2O,2} - p_{H2O,1}$ kaum eine merkliche Diffusion von Wasserdampfmolekülen durch die innere Folie treibt, selbst wenn dieselbe nur eine begrenzte Dichtigkeit gegenüber Wasserdampf aufweist. Für diesen Zweck ist jedoch nicht jedes Trockenmittel geeignet. Vielmehr muss dieses in der Lage sein, trotz einer erheblichen Wasseraufnahme einen niedrigen Wasserdampf-Partialdruck $p_{H2O}$ sicherzustellen. Die Erfinder haben nun herausgefunden, dass diese Eigenschaft mit dem Verlauf der Wasserdampf-Adsorptionsisotherme $\theta_{H2O} = \theta_{H2O}(p_{H2O})_{T=23°C}$ bei einer Temperatur T = 23 °C und bei niedrigen Partialdrucken $p_{H2O}$ unterhalb des Sättigungsdampfdrucks $p_{H2O,sätt}$: $p_{H2O} < p_{H2O,sätt}$ verknüpft ist, und weitaus weniger mit der absoluten Wasserdampf-Aufnahmekapazität des verwendeten Trockenmittels. Denn die Wasserdampf-Aufnahmekapazität eines Trockenmittels wird normalerweise für einen Wasserdampfpartialdruck bei einer Luftfeuchte von 50 % angegeben, d.h., $p_{H2O} = 0,5 * p_{H2O,Sätt}$; da letzterer bei Raumtemperatur von 23 °C und atmosphärischem Luftdruck $p = p_{atm}$ etwa bei 30 mbar liegt, beziehen sich diese Angaben somit üblicherweise auf einen Wasserdampfpartialdruck $p_{H2O}$ von etwa 15 mbar. Bei den meisten Trockenmitteln sinkt jedoch die Wasserdampf-Aufnahmekapazität mit sinkendem Wasserdampf-Partialdruck rapide ab, d.h., bei dem hier angestrebten Wasserdampfpartialdruck von etwa 1 mbar oder darunter ist ein solches Trockenmittel kaum in der Lage, eine nennenswerte Wasserdampfmenge zu adsorbieren. Es gibt jedoch Trockenmittel, deren Wasserdampf-Adsorptionsisotherme $\theta_{H2O} = \theta_{H2O}(p_{H2O})|_{T=23°C}$ bei einer Temperatur T = 23 °C und bei niedrigen Wasserdampfpartialdrucken $p_{H2O}$ unterhalb des Sättigungsdampfdrucks $p_{H2O,sätt}$: $p_{H2O} < p_{H2O,Sätt|T=23°C,p=patm}$ minorisieren lässt durch eine Langmuir-Kurve $\theta_{H2O,L}$ gemäß der Formel $\theta_{H2O} = \theta_{H2O}(p_{H2O})|_{T=23°C} \geq \theta_L = K_L * p_{H2O} / [1 + K_L * p_{H2O}]$, mit einer Langmuir-Konstante $K_L = 10^2$ bar$^{-1}$ oder größer, vorzugsweise mit $K_L = 10^3$ bar$^{-1}$ oder größer, insbesondere mit $K_L = 10^4$ bar$^{-1}$ oder größer. Zwar hat selbst ein solcher Kurvenverlauf im idealen Vakuum, also bei einem Wasserdampf-Partialdruck $p_{H2O} = 0$, eine Nullstelle, d.h., die Wasserdampfaufnahmefähigkeit geht dort gegen Null; bereits bei einem endlichen Vakuum, also $p_{H2O} \approx 0$, jedoch $p_{H2O} > 0$, steigt die Langmuir-Kurve $\theta_{H2O,L}$ und damit auch die tatsächliche, durch jene idealisierte Kurve minorisierte Wasserdampf-Adsorptionsisotherme steil an, nämlich mit einer Steigung $K_L \geq 100$ bar$^{-1}$ oder mit einer Steigung $K_L \geq 1.000$ bar$^{-1}$ oder sogar mit einer Steigung $K_L \geq 10.000$ ba$^{-1}$. Da die relative Beladung $\theta_{H2O}$ des Trockenmittels, die definiert ist als die tatsächliche Beladung q, bezogen auf die maximale Wasseraufnahmekapazität $q_{max}$, kann sie maximal den Wert 1 annehmen. Bei einer konstanten Steigung von $K_L = 10.000$ bar$^{-1}$ würde dieser Wert bereits bei einem Wasserdampfpartialdruck $p_{H2O} = 0,1$ mbar erreicht: $\theta_{H2O} = K_L * p_{H2O} = 10.000$ bar$^{-1} * 0,1$ mbar = 1. Der tatsächliche Verlauf der Langmuir-Kurve $\theta_{H2O,L}$ flacht sich jedoch ab und erreicht bei $p_{H2O} = 0,1$ mbar erst einen Wert von $\theta_{H2O} = K_L * p_{H2O} / [1 + K_L * p_{H2O}] = 10.000$ bar$^{-1} * 0,1$ mbar / [1 + 10.000 bar$^{-1} * 0,1$ mbar] = 1 / [1 + 1] = 0,5. Dies bedeutet allerdings dennoch, dass die effektive Wasserdampfaufnahmefähigkeit bei einem angestrebten Wasserdampfpartialdruck $p_{H2O} = 0,1$ mbar bereits bei 50 % der maximalen Wasserdampfaufnahmefähigkeit $q_{max}$ liegt. Beträgt demzufolge die maximale Wasserdampfaufnahmefähigkeit $q_{max} = m_{H2O,max}/m_{TM} = 0,2$, d.h., das Trockenmittel kann maximal 20 % seines Eigengewichts bzw. seiner Trockenmasse $m_{TM}$ an Wasser aufnehmen, also eine Wassermenge $m_{H2O,max} = 0.2 * m_{TM}$, so liegt die effektive Wasseraufnahme q bei einem Wasserdampfpartialdruck $p_{H2O} = 0,1$ mbar bei 10 % seines Eigengewichts $m_{TM}$ in trockenem Zustand. Bei einer Flächendichte des Trockenmittels von 100 g/m$^2$ wäre dies demnach eine Menge von 10 g/m$^2$. Dies bedeutet, ein solches Trockenmittel könnte bei einer Temperatur von 23 °C 10 g Wasser pro Quadratmeter des Vakuumisolationspaneels aufnehmen, ohne dass dadurch der Wasserdampfpartialdruck innerhalb des Zwischenraums zwischen den beiden Folien über einen Wert von 0,1 mbar ansteigt.

Solange bei einer Temperatur von 23 °C die Wasseraufnahme in dem Trockenmittel nicht über einen Wert von 10% des Eigengewichts des Trockenmittels in trockenem Zustand ansteigt, bleibt gemäß der Erfindung der Wasserdampfpartialdruck innerhalb des Zwischenraums zwischen den beiden Folien auf einem Wert von 0,1 mbar oder darunter. Dieses Kriterium kann ebenfalls verwendet werden, um für die Erfindung geeignete Trockenmittel von ungeeigneten zu unterscheiden, welche diese Relation nicht erfüllen.

Die Langmuier-Kurve $\theta_{H2O,L} = K_L * p_{H2O} / [1 + K_L * p_{H2O}]$ ergibt sich aus folgender Überlegung:
Das betrachtete Trockenmittel verfügt auf seiner (inneren) Oberfläche über potentielle, leere Anlagerungsstellen (S*) sowie über mit Partikeln, d.h. Wasserdampfmolekülen, gefüllte Anlagerungsstellen (SP). Ferner gibt es eine Anzahl von Partikel bzw. Wasserdampfmoleküle in dem Gasvolumen (P). Die Anzahl der gefüllten Anlagerungsstellen (SP) ist proportional zur Beladung $\theta_{H2O}$ des Trockenmittels mit $H_2O$-Molekülen, die Anzahl der leeren Anlagerungsstellen (S*) ist proportional zu 1 - $\theta_{H2O}$, und die Anzahl der Wasserdampfmoleküle (P) im Gasvolumen ist proportional zum Wasserdampf-Partialdruck $p_{H2O}$. Betrachtet man die Konzentrationen [S*] = c(S*), [SP] = c(SP) und [P] = c(P), so lässt sich bei einer konstanten Temperatur T, beispielsweise bei T = 23 °C, die folgende Gleichgewichtskonstante $K_L$ berechnen:

$$K_L = [SP] / [S^*] [P],$$

und durch Einsetzen der obigen Zusammenhänge ergibt sich daraus:

$$K_L = \theta_{H2O} / [(1 - \theta_{H2O}) * p_{H2O}].$$

Dies lässt sich wie folgt umformen:

$$\theta_{H2O} = K_L * [(1 - \theta_{H2O}) * p_{H2O}],$$

$$\theta_{H2O} [1 + K_L * p_{H2O}] = K_L * p_{H2O},$$

$$\theta_{H2O} = K_L * p_{H2O} / [1 + K_L * p_{H2O}].$$

Das bedeutet, die Langmuir-Konstante $K_L$ ist eigentlich die Gleichgewichtskonstante für die "Reaktion"

$$S^* + P \leftrightarrow SP,$$

die in beiden Richtungen mit unterschiedlichen Geschwindigkeiten abläuft. Je größer $K_L$ ist, umso stärker überwiegt die Adsorption gegenüber der Desorption. Demnach ist der für die Erfindung charakteristische Parameter $K_L$ ein Maß für die Neigung oder Affinität des Trockenmittels, die potentiell beladbaren Stellen, beispielsweise im Inneren des Trockenmittels, mit Wassermolekülen anzufüllen, auch und insbesondere wenn die Wassermoleküle nur in geringer Menge vorhanden sind, also bei niedrigen Partialdrucken. Im Gegensatz dazu ist die bei Trockenmittel häufig angegebene maximale Wasseraufnahmefähigkeit $q_{max}$ ein Kriterium für die Anzahl der potentiell beladbaren Stellen eines Trockenmittels, sagt aber nichts darüber aus, mit welcher Neigung das betreffende Trockenmittel auch tatsächlich bestrebt ist, diese vorhandenen, beladbaren Stellen auch tatsächlich zu füllen.

Wegen $K_L$ = [SP] / [S*] [P] ist die Langmuir-Konstante $K_L$ auch bestimmend für die freie Enthalpie oder Gibbs-Energie $\Delta G$ bei T = 23° gemäß folgender Formel:

$$\Delta G = \Delta G° + RT * \ln K_L,$$

wobei

R = 8,314472(15) J mol$^{-1}$ K$^{-1}$ die universelle Gaskonstante ist, und
T die absolute Temperatur in Kelvin, insbesondere T = 296,15 Kelvin.

Die obige Gleichung ist allerdings keine chemische Raktion im eigentlichen Sinne, da mit der Anlagerung von Wassermolekülen an der (inneren) Oberfläche des Trockenmittels im Allgemeinen keine chemische Veränderung einhergeht; allerdings gibt es neben der Physisorption auch eine Chemisorption.

Die weiter oben verwendete Formulierung "$\theta_{H2O,L}$ minorisiert $\theta_{H2O}$" soll in dem Sinne verstanden werden, dass die tatsächliche Wasserdampfbeladungskurve bzw. Wasserdampf-Adsorptionsisotherme $\theta_{H2O}$ in dem betrachteten Definitionsbereich T = 23 °C, $p_{H2O} \leq p_{H2O,Sätt}$ niemals unterhalb der idealisierten Langmuir-Kurve $\theta_{H2O,L}$ verläuft, sondern wenigstens gleich groß ist wie jene:

$$\theta_{H2O}|_{T=23°C} \geq \theta_{H2O,L} \text{ für } 0 \leq p_{H2O} \leq p_{H2O,Sätt.}$$

Es hat sich als günstig erwiesen, dass das in dem Schalenmaterial verwendete Trocknungsmittel bei einer Temperatur T = 23 °C eine auf das eigene Trockengewicht bzw. auf die eigene Trockenmase $m_{TM}$ bezogene, maximale Wasserdampfaufnahmekapazität $q_{max} = m_{H2O,max}/m_{TM}$ von 0,1 oder mehr aufweist: $q_{max} = m_{H2O,max}/m_{TM} \geq 0,1$; beispielsweise eine maximale Wasserdampfaufnahmekapazität $q_{max} = m_{H2O,max}/m_{TM}$ von 0,2 oder mehr: $q_{max} = m_{H2O,max}/m_{TM} \geq 0,2$; vorzugsweise eine maximale Wasserdampfaufnahmekapazität $q_{max} = m_{H2O,max}/m_{TM}$ von 0,3 oder mehr: $q_{max} = m_{H2O,max}/m_{TM} \geq 0,3$; insbesondere eine maximale Wasserdampfaufnahmekapazität $q_{max} = m_{H2O,max}/m_{TM}$ von 0,4 oder mehr: $q_{max} = m_{H2O,max}/m_{TM} \geq 0,4$. Es handelt sich hierbei um die größtmögliche Wasserdampfaufnahmekapazität, die bei dem Sättigungsdampfdruck unter Standardbedingungen, also bei T = 23 °C und einem atmosphärischen Luftdruck p = $p_{atm}$ möglich ist.

Ferner empfiehlt die Erfindung, dass das Trocknungsmittel bei einer Temperatur T = 23 °C und bei einer Feuchte von 2 %, bezogen auf den Sättigungsdampfdruck $p_{H2O,Sätt}$ unter Standardbedingungen (T = 23 °C, relative Luftfeuchte 50 %): $p_{H2O} = 0,01 * p_{H2O,Sätt}$ eine auf das eigene Trockengewicht bzw. auf die eigene Trockenmase $m_{TM}$ bezogene Wasserdampfaufnahmekapazität $q = m_{H2O}/m_{TM}$ von 0,05 oder mehr aufweist: $q = m_{H2O}/m_{TM} \geq 0,05$; beispielsweise eine Wasserdampfaufnahmekapazität $q = m_{H2O}/m_{TM}$ von 0,1 oder mehr: $q = m_{H2O}/m_{TM} \geq 0,1$; vorzugsweise eine Wasserdampfaufnahmekapazität $q = m_{H2O}/m_{TM}$ von 0,15 oder mehr: $q = m_{H2O}/m_{TM} \geq 0,15$; insbesondere eine Wasserdampfaufnahmekapazität $q = m_{H2O}/m_{TM}$ von 0,2 oder mehr: $q = m_{H2O}/m_{TM} \geq 0,2$. Dieser Wert ist auf einen reduzierten Wasserdampfpartialdruck bezogen, wobei als Standardbedingungen T = 23 °C und relative Luftfeuchte von 50 % sind. Dies entspricht - bezogen auf den absoluten Sättigungsdampfdruck $p_{H2O,sätt}$ (entsprechend 100 % Luftfeuchte) einem Wert von nur 1 %: $p_{H2O} = 0,01 * p_{H2O,Sätt}$.

Weiterhin liegt es im Rahmen der Erfindung, dass das Trocknungsmittel bei einer Temperatur T = 23 °C und bei einem Dampfdruck p von wenigstens 1 % des Sättigungsdampfdruckes $p_{Sätt}$: $p > 0,01 * p_{Sätt}$ eine auf das eigene Trockengewicht bzw. auf die eigene Trockenmase $m_{TM}$ bezogene, maximale Wasserdampfaufnahmekapazität $q_{max} = m_{H2O,max}/m_{TM}$ von 0,05 oder mehr aufweist: $q_{max} = M_{H2O,max}/M_{TM} \geq 0,05$; beispielsweise eine maximale Wasserdampfaufnahmekapazität $q_{max} = m_{H2O,max}/m_{TM}$ von 0,1 oder mehr: $q_{max} = m_{H2O,max}/m_{TM} \geq 0,1$; vorzugsweise eine maximale Wasserdampfaufnahmekapazität $q_{max} = m_{H2O,max}/m_{TM}$ von 0,15 oder mehr: $q_{max} = m_{H2O,max}/m_{TM} \geq 0,15$; insbesondere eine maximale Wasserdampfaufnahmekapazität $q_{max} = m_{H2O,max}/m_{TM}$ von 0,2 oder mehr: $q_{max} = m_{H2O,max}/m_{TM} \geq 0,2$.

Weitere Vorteile lassen sich dadurch erzielen, dass die Volumenänderung oder Quellung des Trocknungsmittels in dem Zwischenraum zwischen der inneren und der äußeren Folie bei maximaler Wasseraufnahme unter 50 % Luftfeuchtigkeit 5 % oder weniger beträgt, bezogen auf den trockenen Zustand, vorzugsweise 2 % oder weniger, insbesondere 1 % oder weniger.

Die Erfindung bevorzugt ein zellulosefreies Trocknungsmittel.

Als Trocknungsmittel empfiehlt die Erfindung bspw. Zeolith und/oder Calciumoxid.

In dem Füllmaterial in dem Zwischenraum zwischen der inneren und der äußeren Folie beträgt erfindungsgemäß das Volumenverhältnis von Trocknungsmittel zu druckbelastbarem, porösen Material 1 : 2 oder darüber, gegebenenfalls 1 : 1 oder darüber, beispielsweise 2 : 1 oder darüber, gegebenenfalls 3 : 1 oder darüber, bevorzugt 5 : 1 oder darüber, vorzugsweise 7 : 1 oder darüber, inbesondere 9 : 1 oder darüber.

Die Erfindung sieht weiterhin vor, dass die innere Folie und die äußere Folie einen unterschiedlichen Schichtaufbau aufweisen und/oder sich wenigstens in einer Lage durch eine unterschiedliche Zusammensetzung voneinander unterscheiden. Dadurch ist es möglich, jede der beiden Folien für eine Dichtigkeit gegenüber unterschiedlichen Gasen und/oder Dämpfen zu optimieren.

Es hat sich als günstig erwiesen, dass der Raum innerhalb der inneren Folie auf einen Rest-Druck $p_1$ evakuiert ist, im Allgemeinen auf einen Rest-Druck von 5 mbar oder weniger, gegebenenfalls auf einen Rest-Druck von 2 mbar oder weniger, beispielsweise auf einen Rest-Druck von 1 mbar oder weniger, bevorzugt auf einen Rest-Druck von 0,5 mbar oder weniger, vorzugsweise auf einen Rest-Druck von 0,2 mbar oder weniger, insbesondere auf einen Rest-Druck von 0,1 mbar oder weniger. Hier sollte der Druck so gering als möglich sein, weil damit die besten Wärmedämmungseigenschaften erzielt werden. Der obige Druckbereich stellt dabei einen vernünftigen Kompromiss dar zwischen optimaler Wärmedämmung einerseits und geringen Herstellungskosten andererseits.

Auch der Raum zwischen der inneren und der äußeren Folie sollte auf einen Rest-Druck $p_2$ evakuiert sein, im Allgemeinen auf einen Rest-Druck von 100 mbar oder weniger, gegebenenfalls auf einen Rest-Druck von 50 mbar oder weniger, beispielsweise auf einen Rest-Druck von 20 mbar oder weniger, bevorzugt auf einen Rest-Druck von 10 mbar oder weniger, vorzugsweise auf einen Rest-Druck von 5 mbar oder weniger, insbesondere auf einen Rest-Druck von 2 mbar oder weniger. Zwar erhöht auch dieser Raum die Gesamt-Isolation weiter; darüber hinaus obliegt es ihm jedoch primär, den inneren Kernraum vor einem Druckanstieg zu bewahren, insbesondere indem er den Differenzdruck von der inneren Folie so weit als möglich wegnimmt. Dies kann er am besten erfüllen, wenn er ebenfalls evakuiert ist.

Die Erfindung sieht weiterhin vor, dass der Raum innerhalb der inneren Folie auf einen niedrigeren Rest-Druck

$p_1$ evakuiert ist als der Rest-Druck $p_2$ in dem Raum zwischen der äußeren und der inneren Folie:

$$p_1 < p_2.$$

Durch diese Maßnahme ist sichergestellt, dass die innere Folie nicht durch eine negative Druckdifferenz von dem inneren Kern abgehoben werden kann, sondern zumindest durch ihre Eigenspannung stets an dem Kern anliegt. Damit werden unkontrollierte Zustände vermieden.

Andererseits sollte der Raum zwischen der äußeren und der inneren Folie etwa auf den selben Rest-Druck $p_2$ evakuiert sein wie der Rest-Druck $p_1$ in dem Raum innerhalb der inneren Folie, also vorzugsweise auf eine absolute Druckdifferenz von 1 mbar oder darunter: $|\Delta p| = |p_1 - p_2| \leq 10$ mbar, bevorzugt: $|\Delta p| = |p_1 - p_2| \leq 5$ mbar, vorzugsweise: $|\Delta p| = |p_1 - p_2| \leq 2$ mbar, insbesondere: $|\Delta p| = |p_1 - p_2| \leq 1$ mbar.

Damit wird erreicht, dass an der inneren Folie nur ein minimaler Druck abfällt, welcher in Anbetracht der ohnehin guten Absperrwirkung keine nennswerte Diffusion von dem Folienzwischenraum in den inneren Kernraum nach sich zieht. Erst wenn in dem Folienzwischenraum der Druck deutlich angestiegen ist, wird auch allmählich eine erkennbare Diffusion von dort in den inneren Kernraum stattfinden, der jedoch nicht stärker sein kann als die Diffusion von der Umgebung in den Folienzwischenraum. Es ist also davon auszugehen, dass die doppelte Folienlage mindestens eine Verdoppelung der nutzbaren Lebensdauer eines derartigen Vakuumisolationskörpers zur Folge hat, eventuell sogar eine noch deutlichere Steigerung seiner Lebensdauer.

Weitere Vorteile lassen sich dadurch erzielen, dass ein Füllmaterial des Kerns und/oder der Schale aus einem druckbelastbaren, porösen, vorzugsweise offenporigen Material mit niedriger Wärmeleitfähigkeit besteht, und/oder aus einem Trocknungsmittel; auch ein Gettermaterial kann darin enthalten sein. Als Trocknungsmittel wird dabei eine Substanz angesehen, die in der Lage ist, Feuchtigkeit, insbesondere Wasserdampf zu absorbieren und dadurch den Dampfdruck zu senken. Bevorzugte Materialien sind in der Lage, die aufgenommene Feuchtigkeit einzulagern, ggf. unter Änderung der chemischen und/oder physikalischen Struktur. Sofern ein Material mit den Eigenschaften eines Trocknungsmittels obendrein druckbelastbar und porös, insbesondere offenporig, ist, kann es ggf. in reiner Form verwendet werden. Andererseits empfiehlt sich die Verwendung einer Mischung aus beiden Substanzen.

Die Erfindung bevorzugt ein Pulver, einen Schaum oder Glasfasern als druckbelastbares, poröses Material. Solche Substanzen vereinen die Eigenschaften einer ausreichenden Druckbelastbarkeit mit einem besonders hohen Porenanteil. Offenporiger Polyurethanschaum ist geeignet, ein Kunststoff, der sich durch die Urethan-Gruppe -NH-CO-O- auszeichnet, insbesondere als Bestandteil des die Hauptkette bildenden Monomers.

Als Trocknungsmittel empfiehlt die Erfindung hygroskopische Materialien, welche in der Lage sind, Feuchtigkeit aus der Umgebung aufzunehmen und zu binden, insbesondere einzulagern. Besonders geeignet für den vorliegenden Anwendungsfall erscheinen hygroskopische Substanzen, welche einmal aufgenommene Wassermoleküle möglichst schwer wieder abgeben, beispielsweise weil sie durch die Wasseraufnahme ihre Molekülstruktur ändern. Sofern das aufgenommene Wasser bei einer erhöhten Temperatur wieder abgegeben wird, so sollte dies erst bei Temperaturen der normalen Gebrauchstemperaturen liegen, also vorzugsweise oberhalb von 60 °C, insbesondere oberhalb von 80 °C.

Manche hygroskopische Substanzen, insbesondere pflanzliche oder tierische Materialien wie beispielsweise Holz oder Schafwolle erscheinen allerdings weniger geeignet, da sie die aufgenommene Feuchtigkeit nicht dauerhaft festhalten können. Hierzu dürften auch manche anorganische Substanzen zu rechnen sein, insbesondere wenn die Einlagerung nicht mit einer Strukturveränderung einhergeht. In diesem Zusammenhang müssen wohl Xerogele genannt werden, insbesondere Kieselgel, also amorphes Siliziumdioxid, mit der Summenformel $SiO_2$. Hierbei handelt es sich um einen porösen Körper, der zwar in der Lage ist, ein bis zwei Dirttel seines Gewichts an Wasser aufzunehmen, welches in seine Poren eingelagert werden kann jedoch nur bei hoher Luftfeuchtigkeit; bereits bei einer mittleren Luftfeuchtigkeit wird dieser Wert weit verfehlt, und bei niedriger Luftfeuchte wird sogar Wasser abgegeben.

Besser geeignet erscheinen insofern Zeolithe, also Materialien aus einer Stoffgruppe mit der folgenden Zusammensetzung:

$$M^{n+}_{x/n}[(AlO_2)^-_x(SiO_2)_y] \cdot zH_2O,$$

wobei M typischerweise ein Kation eines Alkali- oder Erdalkalimetalls ist, mit dem Ladungsfaktor n; aus Gründen der elektrischen Neutralität der Gesamtsusbstanz entspricht sein Anteil dem 1/n-ten Anteil der negativ geladenen Aluminiumoxid-Tetraeder.

Die Struktur umfasst ein Gerüst aus $AlO_4^-$- und $SiO_4$-Tetraedern; dabei stellen Sauerstoffatome die Verbindung zwischen Aluminium- und Silizium-Atomen her, wobei Mikroporen entstehen, worin Wassermoleküle eingelagert werden können. Der Faktor z gibt an, wieviel Wasser bereits in die Poren des Kristalls eingelagert ist.

Auch Calciumoxid CaO hat für die Erfindung günstige Eigenschaften.

Die Erfindung erlaubt eine Weiterbildung dahingehend, dass der Kern und/oder das Füllmaterial aus einem Fasermaterial besteht, vorzugsweise aus einem anorganischen Fasermaterial, insbesondere aus einem Fasermaterial mit einer Wärmeleitfähigkeit von 3 mW/(m*K) oder weniger, wie beispielsweise aus Mineralwolle, Steinwolle, Basaltfaser oder Glasfaser, und/oder aus einem Trocknungsmittel und/oder aus einem Gettermaterial.

Bevorzugt weist das Füllmaterial innerhalb der inneren Folie eine andere Zusammensetzung auf als das Füllmaterial in dem Zwischenraum zwischen der inneren und der äußeren Folie.

In dem Füllmaterial des Kerns innerhalb der inneren Folie sollte das Volumenverhältnis von Trocknungsmittel zu druckbelastbarem, porösen Material 1 : 1 betragen oder darunter, im Allgemeinen 1 : 2 oder darunter, beispielsweise 1 : 3 oder darunter, gegebenenfalls 1 : 4 oder darunter, bevorzugt 1 : 5 oder darunter, vorzugsweise 1 : 7 oder darunter, inbesondere 1 : 10 oder darunter. Im Kern des erfindungsgemäßen Vakuumisolationskörpers steht eine möglichst lang andauernde Wärmeisolation im Vordergrund. Daher sind besonders hohe Wärmedämmungseigenschaften, also u.a. eine besonders ausgeprägte Porosität, im Vordergrund.

Dagegen ist es eine der wichtigsten Aufgaben der äußeren Kammer bzw. der Schale, Gasdruck, darunter insbesondere auch Dampfdruck, von der inneren Folie über der Kammer bzw. dem Kern möglichst dauerhaft fernzuhalten. Um dies zu erreichen, ist weiterhin vorgesehen, dass der Zwischenraum zwischen der inneren und der äußeren Folie das Volumenverhältnis zumindest bereichsweise von einem Füllmaterial erfüllt ist, worin ein Trocknungsmittel und/oder ein druckbelastbares, poröses Material enthalten ist, erfindungsgemäß in einem Volumenverhältnis von 1 : 2 oder darüber, gegebenenfalls in einem Volumenverhältnis von 1 : 1 oder darüber, beispielsweise in einem Volumenverhältnis von 2 : 1 oder darüber, gegebenenfalls in einem Volumenverhältnis von 3 : 1 oder darüber, bevorzugt in einem Volumenverhältnis von 5 : 1 oder darüber, vorzugsweise in einem Volumenverhältnis von 7 : 1 oder darüber, inbesondere in einem Volumenverhältnis von 9 : 1 oder darüber. Sollte demnach trotz aller Gegenmaßnahmen Wasserdampf in die äußere Kammer bzw. Schale eindringen, so wird dieser dort von dem Trocknungsmittel bis zu dessen Sättigung aufgenommen, so dass der Dampfdruck zunächst auf einem äußerst niedrigen Niveau bleibt, selbst wenn Wasserdampf durch die äußere Folie allmählich hindurchdiffundiert. Erst wenn die Wasser-Absorbtionsfähigkeit des Trocknungsmittels erschöpft ist, steigt der Dampfdruck in der Schale an, wodurch der Dampf-Differenzdruck zwischen Außen- und Innenkammer bzw. zwischen Schale und Kern entsprechend ansteigt und allmählich auch eine geringe Diffusion durch die innere Folie einesetzt, jedoch zeitlich extrem verzögert, im Idealfall um Jahrzehnte verzögert.

Der innere Kern kann vorgeformt sein, insbesondere etwa der angestrebten Gestalt des gesamten Vakuumisolationspaneels entsprechend. Unabhängig davon, ob das Kernmaterial vorgeformt ist oder erst nach Befüllen der inneren Folie geformt wird, beispielsweie innerhalb einer Presse, sollte der Kern samt innerer Umhüllung zuerst fertiggestellt werden, vorzugsweise vollständig fertiggestellt werden einschlielich Evakuierung, bevor die Schale samt äußerer Hülle hergestellt wird.

Da die äußere Hülle von dem durch die innere Folie umhüllten Kern zumindest bereichsweise angehoben ist, weicht die Form des fertigen Vakuumpaneels von der Form des Kerns ab. Die Erfindung empfiehlt daher, dass die Form des Kerns eine etwa maßstäbliche Verkleinerung der Gestalt des gesamten Vakuumisolationspaneels ist.

Es liegt im Rahmen der Erfindung, dass das Kernmaterial eine Quaderform aufweist, insbesondere eine Plattenform mit zwei zueinander parallelen Grundflächen sowie zwei Längsseiten und zwei Stirnseiten.

Dies entspricht einem besonders wichtigen Anwendungsfall der Erfindung, nämlich plattenförmigen Vakuumisolationkörpern. Diese können zur Wärmedämmung universell eingesetzt werden, beispielsweise zur Wärmeisolation von Hauswänden und/oder -dächern, aber auch für die Wärmedämmung von Kühlschränken oder -boxen. Während dabei ebene Plattenformen bevorzugt werden, gibt es auch Anwendungsfälle für gekrümmte Platten, beispielsweise in Form von zylindrisch gewölbten Platten für die Isolation von Rohren, (Koch-) Töpfen, (Kaffee-) Kannen, etc. Gemeinsam sind diesen Anwendungen, dass zwei vergelcihsweise große Grundflächen vorhanden sind, welche in einem etwa konstanten Abstand zueinander verlaufen. Entlang eines Randes werden diese beiden Grundflächen miteinander verbunden. Dieser Rand kann eine näherungsweise konstante Breite aufweisen.

Im Rahmen einer ersten Ausführungsform kann die den Kern umgebende Schale näherungsweise eine etwa konstante Stärke haben, indem die den Kern umgebende Folie allseits von Füllmaterial bedeckt ist.

Dadurch kann der Herstellungsprozess erheblich vereinfacht werden, weil zwischen den beiden Folien beispielsweise Abstandsplatten als Schalen-Füllmaterial vorgesehen sein können; entlang des Randes könnte ein streifenförmiges Füllmaterial als Abstandhalter eingefügt sein. Vorgefertigtes, platten- oder streifenförmiges Füllmaterial könnte bei der Herstellung beispielsweise außen an der Oberfläche der inneren Folie angekelbt sein, insbesondere natürlich nach Fertigstellung des von der Folie umhüllten Kerns.

Andererseits ist es auch möglich, dass insbesondere bei einer (ebenen oder gewölbten), Vakuumdämmplatte die Schale im Bereich der Grundflächen etwa eine konstante, erste Stärke aufweist und im Bereich des die Grundflächen miteinander verbindenden Randes eine andere, vorzugsweise kleinere Stärke aufweist.

Denn für die Funktion der Erfindung ist es bei einem plattenförmigen (ebenen oder gewölbten) Isolationskörper nicht unbedingt erforderlich, dass ein Füllmaterial der äußeren Schale die innere Folie vollständig einhüllt. Es würde vielmehr beispielsweise genügen, wenn eine oder vorzugsweise beide Grundflächen des erstmalig umhüllten Kerns mit einem Abstandsmaterial belegt werden, wenn auf andere Weise sichergestellt ist, dass die beiden Hüllfolien möglichst allseits voneinander beabstandet sind.

Dies könnte beispielsweise dadurch bewirkt werden, dass ein Vlies oder ein anderes flexibles, poröses Material um den erstmalig eingehüllten und vorzugsweise bereits evakuierten Kern gewickelt wird, wahlweise unmittelbar auf die innere Hülle oder um den umhüllten Kern samt daran applizierter Abstandsplatte oder dergleichen Füllmaterial. Es könnten also beispielsweise zunächst eine oder mehrere Abstandsplatten oder -streifen aus einem geeigneten Füllmaterial an der inneren Hüllfolie des Kerns angeklebt werden, und sodann wird diese Einheit in ein Vlies oder ein anderes flexibles, poröses Material eingehüllt, bevor schließlich die äußere Hülle appliziert wird. Sofern bei einer derartigen Methode die Stirn- oder Randflächen nur mit einem Vlies od. dgl. umhüllt werden, ist eine ggf. verminderte Wärmdämmeigenschaft des nur die Grundfläche(n) bedeckenden Hüllmaterials der Schale unkritisch und wird den Gesamt-Dämmwert des Vakuumisolationspaneels nicht schmälern, insbesondere keine Wärmebrücken verursachen.

Innerhalb der inneren Folie kann wenigstens ein Getter zum Binden von Gasmolekülen vorgesehen sein, bspw. eine Verbindung aus einem Metall wie Aluminium, Barium, Titan oder Zirkonium mit einem Gas wie Sauerstoff, Stickstoff oder Wasserstoff.

Bevorzugt ist die innere Folie als luftdichte Barrierefolie ausgebildet, beispielsweise als Mehrschichtfolie mit wenigstens einer Lage aus einem Copolymer zwischen Ethen und Vinylalkohol, bevorzugt metallisiert. Als bevorzugte Haupteigenschaft sollte diese Folie besonders luftdicht sein, also gasdicht, um den Kernbereich als die eigentliche Wärmedämmschicht möglichst vollständig druckfrei zu halten.

Sofern hinter dieser Eigenschaft die Dampfdichtheit der inneren Hülle zurücksteht, erscheint dies dann tolerierbar zu sein, wenn dafür die äußere Hülle möglichst dampfdicht ausgebildet ist. Daher empfiehlt die Erfindung, dass die äußere Folie als luft- und/oder dampfdichte Barrierefolie ausgebildet ist, beispielsweise als Mehrschichtfolie mit wenigstens einer Lage aus einem Copolymer zwischen Ethen und Vinylalkohol, bevorzugt metallisiert, also an zumindest einer Seite mit einer dünnen, vorzugsweise aufgedampften Metallschicht versehen.

Obwohl die Erfindung demnach sowohl für die innere Hülle als auch für die äußere Hülle ein Material oder zumindest eine Lage aus einem Copolymer zwischen Ethen und Vinylalkohol präferiert, soll dies nicht unbedingt bedeuten, dass in beiden Fällen exakt das selbe Material zum Einsatz gelangen soll. Denn Folien aus einem Copolymer zwischen Ethen und Vinylalkohol können unterschiedliche Dichtigkeitseigenschaften aufweisen, je nachdem, wie das Verhältnis der Anteile von Ethen und Vinylalkohol eingestellt ist. Denn mit den Monomeren Ethen - $C_2H_4$ - Vinylalkohol - $C_2H_4O$ - lassen sich Copolymere in unterschiedlichen Massenverhältnissen herstellen; die Polymerisation erfolgt allerdings nicht aus den Momeren selbst, sondern vorzugsweise unter Verwendung von Ethen und Vinylacetat, wobei die Acetylgruppe anschließend abhydrolisiert wird. Die potentielle Varianz des entstehenden Copolymers ist u.a. darin , dass bei der Polymerisation die Reihenfolge der Monomer-Gruppen im Makromolekül nicht festgelegt ist, sondern sich willkürlich einstellt, d.h., zufällig bzw. allenfalls noch in der Häufigkeitswahrscheinlichkeit entsprechend dem Mischungsverhältnis der Edukte. Eben dieser Freiheitsgrad ermöglicht einen Einfluss auf die Eigenschaften des fertigen Produkts. In der Praxis liegt der Ethenanteil zumeist etwa zwischen 20 mol-% und 50 mol-%, d.h., der Anteil der Ethen-Monomere in einem Makromolekül des Copolymers liegt etwa zwischen 20 % und 50 % aller beteiligten Monomere des Makromoleküls. Dabei hat ein größerer Anteil des Vinylalkohols zwar eine höhere Barrierewirkung gegenüber Gasen zur Folge, erhöht allerdings auch die ohnehin vorhandenen, hygroskopischen Eigenschaften des Copolymers, und senkt damit einerseits die Barrierewirkung gegenüber Wasserdampf und bei zunehender Sättigung mit Wasserdampf sogar auch die Barrierewirkung gegenüber Gasen.

Anders ausgedrückt, das Copolymer hat bei einem geringen Ethenanteil von beispielsweise 20 bis 25 mol-% zwar eine Gasdurchlässigkeit von nur etwa 0,05 $cm^3$ / ($m^2$ * d * bar), aber eine Wasserdampfdurchlässigkeit von etwa 5 g / ($m^2$ * d). Wird dagegen der Ethenanteil maximiert auf beispielsweise 45 bis 50 mol-%, so sinkt zwar die Wasserdampfdurchlässigkeit auf etwa 0,5 g / ($m^2$ * d), also etwa auf ein Zehntel des Wertes bei geringem Ethenanteil; andererseits steigt dafür die Gasdurchlässigkeit auf etwa 0,5 $cm^3$ / ($m^2$ * d * bar), also etwa auf den zehnfachen Wert im Verhältnis zu der Variante mit geringem Ethenanteil.

In Anbetracht dieser Zusammenhänge schlägt die Erfindung vor, die äußere Folie im Hinblick auf eine niedrige Wasserdampfdurchlässigkeit zu optimieren, dort also ein Copolymer mit Ethen- und Vinylalkohol-Monomeren zu verwenden, wobei der Anteil der Ethen-Monomere bei 30 mol-% oder mehr liegen sollte, vorzugsweise bei 35 mol-% oder mehr, insbesondere bei 40 mol-% oder mehr. Doch hindurch permeierender Dampf wird in dem Schalenraum zwischen den beiden Folien vorläufig gebunden und also neutralisiert, so dass der Dampfdruck innerhalb dieses Zwischenraums und damit der Dampf-Differenzdruck über der inneren Folie vorläufig vernachlässigbar gering bleibt.

Daher kann die innere Folie für einen niedrige Gasdurchlässigkeit optimiert werden, indem dort eine Folie mit wenigstens einer Lage eines Copolymers aus Ethen- und Vinylalkohol-Monomeren zu verwenden, wobei der Anteil der Ethen-Monomere bei 40 mol-% oder weniger liegen sollte, vorzugsweise bei 35 mol-% oder weniger, insbesondere bei 30 mol-% oder weniger.

Im Besonderen kann die innere Folie als luftdichte Barrierefolie ausgebildet sein, beispielsweise als Mehrschichtfolie mit wenigstens einer Lage aus einem Ethen-Vinylalkohol-Copolymer, bevorzugt metallisiert, insbesondere mit einem Stoffmengenanteil des Ethens von 40 mol-% oder weniger, vorzugsweise mit einem Stoffmengenanteil des Ethens von 35 mol-% oder weniger, insbesondere mit einem Stoffmengenanteil des Ethens von 30 mol-% oder weniger.

Erfindungsgemäß kann weiterhin vorgesehen sein, dass die äußere Folie bei Standardbedingungen (23 °C, relative Luftfeuchtigkeit 50 %) eine Wasserdampfdurchlässigkeit von 10 g/(m$^2$*a) oder weniger aufweist, beispielsweise von von 5 g/(m$^2$*a) oder weniger, vorzugsweise von 2 g/(m$^2$*a) oder weniger, insbesondere von 1 g/(m$^2$*a) oder weniger.

Eine weitere, bevorzugte Konstruktionsvorschrift besagt, dass die äußere Folie als luft- und/oder dampfdichte Barrierefolie ausgebildet ist, beispielsweise als Mehrschichtfolie mit wenigstens einer Lage aus einem Ethen-Vinylalkohol-Copolymer, bevorzugt metallisiert, insbesondere mit einem Stoffmengenanteil des Ethens von 30 mol-% oder mehr, vorzugsweise mit einem Stoffmengenanteil des Ethens von 35 mol-% oder mehr, insbesondere mit einem Stoffmengenanteil des Ethens von 40 mol-% oder mehr.

Ein besonders hoher Dichtewert lässt sich erreichen, indem die äußere Folie zumindest teilweise aus Aluminium besteht oder zumindest teilweise mit Aluminium belegt ist. Eine reine Aluminiumfolie übertrifft hinsichtlich der Dichtigkeit eine metallisierte Hochbarrierefolie und ist daher im Allgemeinen, d.h. abgesehen vom Preis-Leistungs-Verhältnis, vorzuziehen.

Allerdings kann der erhöhte Metallquerschnitt einer reinem Aluminiumfolie im Bereich der Randseiten zu Wärmebrücken führen. Deshalb kann eventuell der Einsatz reiner Aluminiumfolien auf die Grundflächen eines plattenförmigen Vakuumisolationskörpers beschränkt sein, indem die äußere Folie (nur) an zwei einander gegenüber liegenden Flächen mit einer Aluminium-Lage versehen ist.

Es liegt im Rahmen der Erfindung, dass die äußere Folie ausschließlich mit sich selbst versiegelt ist, jedoch nicht mit der inneren Folie.

Die innere Folie sollte vollständig an den inneren Kern herangefaltet sein, damit die Kongruenz der äußeren Gestalt des Vakuumisolationspaneels mit der Form des Kerns hergestellt werden kann. Abstehende Schweißlaschen sollten also vor dem Einfügen des umhüllten Kerns in die äußere Folie und/oder vor dem Belegen mit dem Schalenmaterial umgelegt werden.

Ferner entspricht es der Lehre der Erfindung, dass an jeder Ecke des inneren Kerns fünf Faltungslinien der inneren Folie zusammenlaufen. Beim Umfalten von Schweißlaschen ist Wert darauf zu legen, dass die betreffende Folie dabei nicht gestresst wird, weil solchenfalls rasch eine undichte Stelle erzeugt würde, wodurch alle anderen Anstrengungen, einen dichten und damit langlebigen Vakuumisolationskörper zu erzeugen, vereitelt wären. Aus diesem Grunde sollten alle Faltungsvorgänge - gleich ob vor oder nach dem Evakuieren - für die Folie möglichst stressfrei vorgenommen werden. Dies bedeutet, dass ein Faltungsplan beachtet werden sollte, wobei die Folie jedenfalls theoretisch von jeglicher Dehnung verschont bleibt. Dies setzt insbesondere an den Ecken voraus, dass dort wenigstens jeweils fünf Faltungslinien zusammenlaufen, damit der dortige überschüssige Folienbereich geordnet an den Kern herangefaltet werden kann.

Schließlich empfiehlt die Erfindung, dass die innere Folie nur mit sich selbst versiegelt ist, jedoch nicht mit der äußeren Folie.

Weitere Merkmale, Einzelheiten, Vorteile und Wirkungen auf der Basis der Erfindung ergeben sich aus der folgenden Beschreibung einiger bevorzugten Ausführungsformen der Erfindung sowie anhand der Zeichnung. Hierbei zeigt

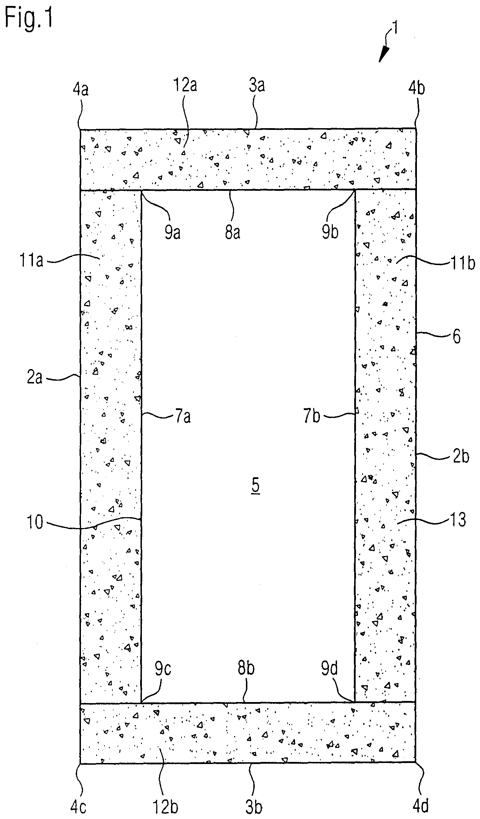

Fig. 1     ein erfindungsgemäßes Vakuumisolationspaneel gemäß einer ersten Ausführungsform der Erfindung in einem Querschnitt; sowie

Fig. 1     eine andere Ausführungsform eines erfindungsgemäßen Vakuumisolationspaneels in einer der Fig. 1 entsprechenden Darstellung.

Der Vakuumdämmkörper 1 aus Fig. 1 hat eine plattenförmige Geometrie mit zwei ebenen, zueinander parallelen Grundflächen 2a, 2b. Diese beiden Grundflächen 2a, 2b haben jeweils gleiche Flächeninhalte $F_V$ und sind deckungsgleich zueinander, sind insbesondere jeweils rechteckig und haben jeweils gleichen Umfang $U_V$. Daher verlaufen die jene verbindenden, ebenen Randflächen, von denen in der Schnittdarstellung gemäß Fig. 1 nur zwei zu erkennen sind, nämlich die Randflächen 3a, 3b, jeweils paarweise parallel zueinander, wie Fig. 1 an den Randflächen 3a, 3b erkennen lässt. Außerdem gehen die Grund- und Randflächen 2a, 2b, 3a, 3b über jeweils rechtwinklige Kanten 4a, 4b, 4c, 4d ineinander über.

Obzwar der Vakuumdämmkörper 1 in seinem Inneren einen Kern 5 enthält, bestimmt dieser nur indirekt die äußere Gestalt des Vakuumdämmkörpers. Denn er stützt eine den Vakuumdämmkörper 1 als dessen Oberfläche begrenzende, äußere Hülle 6 nicht unmittelbar ab.

Der Kern 5 hat eine quaderförmige und plattenförmige Gestalt mit zwei ebenen, zueinander parallelen, insbesondere rechteckigen Grundflächen 7a, 7b gleichen Flächeninhalts $F_K$, welche deckungsgleich zueinander sind und durch ebene Randflächen untereinander verbunden werden, insbesondere durch vier ebene Randflächen, von denen in der Schnittdarstellung gemäß Fig. 1 nur zwei zu erkennen sind, nämlich die Randflächen 8a, 8b; jeweils zwei Randflächen 8a, 8b sind paarweise parallel zueinander. Die Grund- und Randflächen 7a, 7b, 8a, 8b gehen über jeweils rechtwinklige Kanten 9a, 9b, 9c, 9d ineinander über.

Wie man aus Fig. 1 erkennen kann, entsprechen zwar jeweils die Grundflächen 2a, 7a; 2b, 7b und die Randflächen 3a, 8a; 3b, 8b des Vakuumdämmkörpers 1 einerseits und des Kerns 5 andererseits einander; allerdings ist der Flächeninhalt $F_K$ der Grund- und Randflächen 7a, 7b, 8a, 8b des Kerns 5 kleiner als der Flächeninhalt $F_V$ der Grund- und Randflächen 2a, 2b, 3a, 3b des gesamten Vakuumdämmkörpers 1, und zwar jeweils um einen Differenzwert $\Delta F = F_V - F_K$.

Dabei gilt für den Differenzwert $\Delta F$ näherungsweise $\Delta F = d * (U_V + U_K) / 2$, wobei d dem mittleren Abstand zwischen einer Oberfläche 7a, 7b, 8a, 8b des Kerns 5 und der dazu parallelen, nächstgelegenen des Oberfläche 2a, 2b, 3a, 3b des Vakuumdämmkörpers 1 entspricht. Dieser mittlere Abstand d liegt in der Größenordnung von mehreren Millimetern bis wenigen Zentimetern und ist damit deutlich größer als die Stärke $d_a$ der äußeren Folienumhüllung 6:

$$d \gg d_a,$$

vorzugsweise

$$d > 10 * d_a,$$

insbesondere

$$d > 50 * d_a.$$

Der Kern 5 besteht vorzugsweise aus pyrogener Kieselsäure; es wäre aber auch ein Kern 5 aus Polyurethan oder einem anderen, porösen, insbesondere offenporigen Material denkbar.

Der Kern 5 ist unmittelbar umhüllt von einer inneren Folie 10, die als Hochbarrierefolie ausgebildet ist und unter Vakuum um den Kern 5 luftdicht versiegelt wird.

Diese innere Baueinheit aus Kern 5 und innerer Umhüllungsfolie 10 kann auf verschiedenen Wegen hergestellt werden. Wahlweise könnte aus einem oder zwei Foliezuschnitten zunächst eine einseitig offene Tasche geformt werden, und der Kern 5 könnte dann in diese Tasche eingeschoben werden; schließlich würde die noch verbleibende Seite unter Vakuum verschweisst.

Andererseits könnte in eine einseitig offene Tasche aus der Hüllfolie 10 auch ein loses Pulver des Kernmaterials eingefüllt werden und erst unter Vakuum beim endgültigen Versiegeln durch einen äußeren Druck in die gewünschteForm gebracht werden; bei dieser Methode wäre es insbesondere auch möglich, dem Kern 5 die unterschiedlichsten Formen zu erteilen, beispielsweise eine zwar plattenförmige, aber gewölbte Gestalt, wie sie zur Wärmedämmung von Rohren od. dgl. vorteilhaft ist, oder nahezu beliebige andere Formen.

Ein anderes Herstellungsverfahren könnte darin bestehen, auf die Vorformung einer Tasche zu verzichten und einen vorgeformten, beispielsweise plattenförmigen Kern 5 mantelseitig, d.h., entlang seiner beiden Grundflächen 7a, 7b und zweier Randflächen 8a, 8b zu umschlingen. Sodann könnte die Folie 10 in ihrem Überlappungsbereich unter straffer Spannung zu einer Art eng anliegendem Schlauch verschweisst werden, so dass nur noch zwei einander gegenüber liegende Rand- oder Stirnflächen unverschlossen sind.

Dort könnte sodann die zunächst noch überstehende Folie stressfrei zusammen und dabei an den Kern 5 herangefaltet werden. Dies ist insbesondere durch eine geordnete Faltung möglich, wobei an jeder Ecke des Kerns 5 insgesamt fünf Faltungslinien zusammenlaufen.

Nach einer entsprechenden Faltung können die ursprünglich überstehenden, nun aneinander gefalteten Endbereiche der Umfüllungsfolie 10 miteinander verschweisst werden. Die dabei entstehende Schweissbahn kann sodann an den Kern 5 ebenfalls stressfrei herangefaltet werden, so dass die innere Baueinheit aus Kern 5 und innerer Umhüllungsfolie 10 mit guter Näherung als quader- und plattenförmig entsprechend der ursprünglichen Gestalt des Kerns 5 angesehen werden kann.

Die dabei verwendete Hochbarrierefolie 10 kann eine oder mehrere Lagen aus einem Ethen-Vinylalkohol-Copolymer aufweisen, wobei der Stoffmengenanteil des Ethens an dem Copolymer bei 35 mol-% oder weniger sein sollte.

Die innere Baueinheit ist evakuiert, vorzugsweise auf einen Rest-Druck $p_1$ von 0,5 mbar oder weniger.

Sodann wird an jeder der beiden Grundflächen 7a, 7b des Kerns 5 auf der inneren Umhüllungsfolie 10 je eine zu der betreffenden Grundfläche 7a, 7b deckungsgleiche Platte 11a, 11b appliziert und vorzugsweise fixiert, beispielsweise adhäsiv, insbesondere mittels eines oder mehrerer Klebepunkte, -linien oder -flächen. Diese Platten 11a, 11b haben jeweils eine Stärke d und einen Flächeninhalt $F_K$.

Sodann werden entlang der vier noch nicht mir Platten 11a, 11b bedeckten Randflächen 8a, 8b des von der inneren Umhüllungsfolie 10 bedeckten Kerns 5 noch insgesamt vier weitere Platten fixiert, von denen in Fig. 1 nur zwei Platten 12a, 12b wiedergegeben sind. Die Platten 12a, 12b sind haben ebenfalls eine Dicke d und haben jeweils größere Flächeninhalte als die betreffenden Randflächen 8a, 8b. Der Überstand soll derart bemessen sein, dass die äußere Gestalt des von allen sechs Platten 11a, 11b, 12a, 12b bedeckte Kerns 5 wiederum eine quaderförmige und plattenförmige Gestalt aufweist, nun aber mit den Abmessungen des fertigen Vakuumdämmkörpers 1.

Auch die Platten 12a, 12b an den Randflächen 8a, 8b können an der inneren Umhüllungsfolie 10 fixiert sein, beispielsweise adhäsiv.

Die sechs Platten 11a, 11b, 12a, 12b bestehen vorzugsweise aus einem hygroskopischen Material wie beispielsweise Zeolith. Sie bilden zusammengenommen die spätere, den Kern 5 umgebende Schale 13.

Nachdem solchermaßen die Schale 13 ihre Gestalt erhalten hat, wird diese somit hinsichtlich der Gestalt des fertigen Vakuumdämmkörpers 1 bereits fertige Baueinheit aus Kern 5, innerer Umhüllung 10 und Schale 13 nun von der äußeren Hülle 6 umgeben.

Dies kann wahlweise durch Einschieben in eine vorgeformte Tasche der Umhüllungsfolie 6 geschehen, oder durch Einschlagen in einen Folienzuschnitt, anschließendes mantelseitiges Verschweissen der einander überlappenden Folienbereiche in gestrafftem Zustand, sowie nachfolgendem stressfreien Aneinanderfalten der stirnseitig überstehenden Folienbereiche und schließlich ebenfalls Verschweissen der dort aneinander liegenden Folienränder.

Vor dem vollständigen Verschweissen der äußeren Folie wird der von dieser umschlossene Schalenbereich 13 ebenfalls evakuiert, insbesondere auf einen Rest-Druck $p_2$ zwischen 0,5 mbar und 1 mbar, so dass vorzugsweise der Rest-Rest-Druck $p_1$ im Bereich des Kerns 5 nicht größer ist als der Rest- Rest-Druck $p_2$ im Bereich der Schale 13.

Für die äußere Hülle 6 wird ebenfalls eine Hochbarrierefolie verwendet, vorzugsweise aus mehreren Lagen, insbesondere mit wenigstens einer Lage aus einem Ethen-Vinylalkohol-Copolymer, wobei der Stoffmengenanteil des Ethens an dem Copolymer bei 35 mol-% oder mehr betragen sollte.

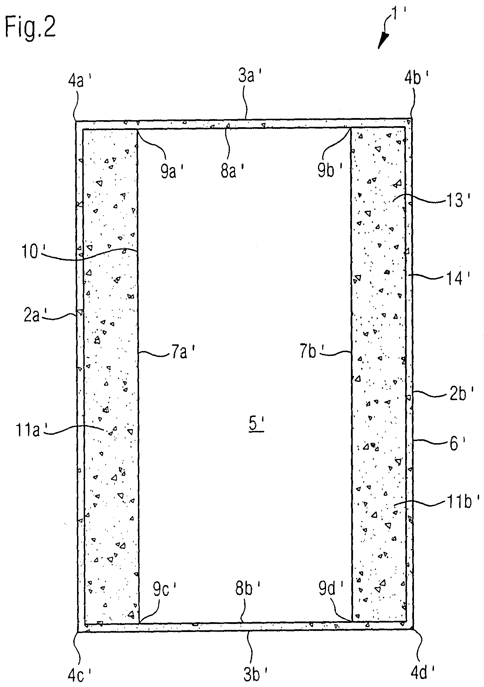

Der Vakuumdämmkörper 1' aus Fig. 2 unterscheidet sich von dem Vakuumdämmkörper 1 nach Fig. 1 vor allem im Bereich der Schale 13, während der Kern 5', die äußere Folie 6' und die innere Folie 10' völlig identisch zu dem ersten Vakuumdämmköprer 1 sein können.

Nachdem die innere Baueinheit aus Kern 5' und innerer Folie 10' nach dem zum Vakuumdämmkörper 1 beschriebenen Verfahren hergestellt wurden, werden die beiden Grundflächen 7a', 7b' mit je einer Platte 11a', 11b' der Stärke d aus Zeolith oder aus einem anderen Füllmaterial, vorzugsweise mit zumindest teilweise hygroskopischen Eigenschaften, belegt; diese Platten 11a', 11b' können an der inneren Folie 10' fixiert werden, beispielsweise adhäsiv, was jedoch bei der Herstellung des Vakuumdämmkörpers 1' nicht unbedingt eforderlich ist.

Denn anstelle nun auch die Randflächen 8a', 8b' mit Platten eines Füllmaterials zu belegen, wird stattdessen die gesamte innere Baueinheit samt der Platten 11a', 11b' nun von einem Vlies 14 eingehüllt, welches poröse und flexible Eigenschaften hat.

Nachdem dies geschehen ist, wird die äußere Folie 6' appliziert, wie zuvor bei dem Vakuumdämmkörper 1 beschrieben, und nach Evakuierung und vollständigem Verschließen der äußeren Folie 6' ist der Vakuumdämmkörper 1' fertiggestellt.

Der Vakuumdämmkörper 1' hat vergleichbar gute Eigenschaften wie der Vakuumdämmkörper 1, insbesondere da die selben Materialien für Kern 5', Platten 11a', 11b', innerer Folie 10' und äußerer Folie 6' zum Einsatz kommen.

Jedoch sind die Wärmedämmungseigenschaften eventuell noch besser, weil an den Rändern die Platten 12a, 12b, welche eventuell schlechtere Wärmedämmungseigenschaften haben als der Kern 5', entfallen.

Bezugszeichenliste

| | |
|---|---|
| 1 | Vakuumdämmkörper |
| 2 | Grundfläche |
| 3 | Randfläche |
| 4 | Kante |
| 5 | innerer Kern |
| 6 | äußere Hülle |
| 7 | Grundfläche |
| 8 | Randfläche |
| 9 | Kante |
| 10 | innere Hülle |
| 11 | poröses Stützmaterial |
| 12 | poröses Stützmaterial |

13   poröses Stützmaterial
14   Vlies

**Patentansprüche**

**1.**   Folienumhüllte Vakuumdämmplatte (1;1') mit wenigstens einem inneren Kern, wenigstens einer äußeren, den Kern umgebenden Folie, aufweisend

   a) eine innere Folie (10; 10'), welche

   a1) sich zwischen dem inneren Kern (5;5') und der äußeren Folie (6;6') befindet und
   a2) wenigstens eine Lage aus einem Ethen-Vinylalkohol-Copolymer aufweist, bevorzugt metallisiert, insbesondere mit einem Permeationswert bei Standardbedingungen (23 °C, relative Luftfeuchtigkeit 50 % außen) von 0,003 cm$^3$/(m$^2$*d) oder weniger,
   a3) wobei die innere und/oder äußere Folie (6,10;6',10') als luftdichte Barrierefolie ausgebildet ist;

   b) ein Schalenmaterial (13;13'), welches

   b1) die äußere Folie (6;6') von der inneren Folie (10;10') wenigstens bereichsweise, vorzugsweise allseits abhebt und
   b2) ein Trocknungsmittel aufweist, welches

   b21) in einer Flächendichte von wenigstens 100 g/m$^2$, bezogen auf die Grundfläche der Vakuumdämmplatte (1;1'), vorhanden ist,
   b22) in dem Füllmaterial (13:13') in dem Zwischenraum zwischen der inneren und der äußeren Folie (6,10;6',10') das Volumenverhältnis von Trocknungsmittel zu druckbelastbarem, porösen Material 1 : 2 beträgt oder darüber, und
   b23) bei einer Temperatur T = 23 °C sowie ab einem Dampfdruck p von 1 % des Sättigungsdampfdruckes $p_{Sätt}$: $p > 0,01 * p_{Sätt}$, eine auf das eigene Trockengewicht bzw. auf die eigene Trockenmase $m_{TM}$ bezogene, Wasserdampfaufnahmekapazität $q_{max} = m_{H2O,max}/m_{TM}$ von 0,05 oder mehr aufweist: $q_{max} = m_{H2O,max}/m_{TM} \geq 0,05$.

**2.**   Folienumhüllte Vakuumdämmplatte (1;1') nach Anspruch 1, **dadurch gekennzeichnet, dass** das Trocknungsmittel bei einer Temperatur T = 23 °C eine auf das eigene Trockengewicht bzw. auf die eigene Trockenmase $m_{TM}$ bezogene, maximale Wasserdampfaufnahme-kapazität $q_{max} = M_{H2O,max}/m_{TM}$ von 0,1 oder mehr aufweist: $q_{max} = m_{H2O,max}/m_{TM} \geq 0,1$; beispielsweise eine maximale Wasserdampfaufnahmekapazität $q_{max} = m_{H2O,max}/m_{TM}$ von 0,2 oder mehr: $q_{max} = m_{H2O,max}/m_{TM} \geq 0,2$; vorzugsweise eine maximale Wasserdampfaufnahmekapazität $q_{max} = m_{H2O,max}/m_{TM}$ von 0,3 oder mehr: $q_{max} = m_{H2O,max}/m_{TM} \geq 0,3$; insbesondere eine maximale Wasserdampfaufnahmekapazität $q_{max} = m_{H2O,max}/m_{TM}$ von 0,4 oder mehr: $q_{max} = m_{H2O,max}/m_{TM} \geq 0,4$.

**3.**   Folienumhüllte Vakuumdämmplatte (1;1') nach einem der vorhergehenden Ansprüche, **dadurch gekennzeichnet, dass** die Volumenänderung oder Quellung des Trocknungsmittels in dem Zwischenraum zwischen der inneren und der äußeren Folie (6,10;6',10') bei maximaler Wasseraufnahme unter 50 % Luftfeuchtigkeit 5 % oder weniger beträgt, bezogen auf den trockenen Zustand, vorzugsweise 2 % oder weniger, insbesondere 1 % oder weniger.

**4.**   Folienumhüllte Vakuumdämmplatte (1;1') nach einem der vorhergehenden Ansprüche, **gekennzeichnet durch** ein zellulosefreies Trocknungsmittel, und/oder durch Zeolith und/oder Calciumoxid als Trocknungsmittel.

**5.**   Folienumhüllte Vakuumdämmplatte (1;1') nach einem der vorhergehenden Ansprüche, **dadurch gekennzeichnet, dass**

   a) in dem Füllmaterial (13;13') in dem Zwischenraum zwischen der inneren und der äußeren Folie (6,10;6',10') das Volumenverhältnis von Trocknungsmittel zu druckbelastbarem, porösen Material 1 : 1 beträgt oder darüber, beispielsweise 2 : 1 oder darüber, gegebenenfalls 3 : 1 oder darüber, bevorzugt 5 : 1 oder darüber, vorzugsweise 7 : 1 oder darüber, inbesondere 9 : 1 oder darüber, und/oder dass
   b) in dem Füllmaterial (5;5') innerhalb der inneren Folie (10;10') das Volumenverhältnis von Trocknungsmittel zu druckbelastbarem, porösen Material 1 : 1 beträgt oder darunter, im Allgemeinen 1 : 2 oder darunter, beispielsweise 1 : 3 oder darunter, gegebenenfalls 1 : 4 oder darunter, bevorzugt 1 : 5 oder darunter, vorzugsweise 1 : 7 oder darunter, inbesondere 1 : 10 oder darunter.

6. Folienumhüllte Vakuumdämmplatte (1;1') nach einem der vorhergehenden Ansprüche, **dadurch gekennzeichnet, dass** der Raum innerhalb der inneren Folie (10;10') auf einen Rest-Druck ($p_1$) evakuiert ist, im Allgemeinen auf einen Rest-Druck ($p_1$) von 5 mbar oder weniger, gegebenenfalls auf einen Rest-Druck ($p_1$) von 2 mbar oder weniger, beispielsweise auf einen Rest-Druck ($p_1$) von 1 mbar oder weniger, bevorzugt auf einen Rest-Druck ($p_1$) von 0,5 mbar oder weniger, vorzugsweise auf einen Rest-Druck ($p_1$) von 0,2 mbar oder weniger, insbesondere auf einen Rest-Druck ($p_1$) von 0,1 mbar oder weniger.

7. Folienumhüllte Vakuumdämmplatte (1;1') nach einem der vorhergehenden Ansprüche, **dadurch gekennzeichnet, dass** der Raum zwischen der inneren und der äußeren Folie (6,10;6',10') auf einen Rest-Druck ($p_2$) evakuiert ist, im Allgemeinen auf einen Rest-Druck ($p_2$) von 100 mbar oder weniger, gegebenenfalls auf einen Rest-Druck ($p_2$) von 50 mbar oder weniger, beispielsweise auf einen Rest-Druck ($p_2$) von 20 mbar oder weniger, bevorzugt auf einen Rest-Druck ($p_2$) von 10 mbar oder weniger, vorzugsweise auf einen Rest-Druck ($p_2$) von 5 mbar oder weniger, insbesondere auf einen Rest-Druck ($p_2$) von 2 mbar oder weniger.

8. Folienumhüllte Vakuumdämmplatte (1;1') nach einem der vorhergehenden Ansprüche, **dadurch gekennzeichnet, dass** der Raum innerhalb der inneren Folie (10;10') auf einen niedrigeren Rest-Druck ($p_1$) evakuiert ist als der Rest-Druck ($p_2$) in dem Raum zwischen der äußeren und der inneren Folie (6,10;6',10'):

$$p_1 < p_2,$$

und/oder dass der Raum zwischen der äußeren und der inneren Folie (6,10;6',10') etwa auf den selben Rest-Druck ($p_2$) evakuiert ist wie der Rest-Druck ($p_1$) in dem Raum innerhalb der inneren Folie (10;10'): $|\Delta p| = |p_1 - p_2| \leq 10$ mbar, bevorzugt: $|\Delta p| = |p_1 - p_2| \leq 5$ mbar, vorzugsweise: $|\Delta p| = |p_1 - p_2| \leq 2$ mbar, insbesondere: $|\Delta p| = |p_1 - p_2| \leq 1$ mbar.

9. Folienumhüllte Vakuumdämmplatte (1;1') nach einem der vorhergehenden Ansprüche, **dadurch gekennzeichnet, dass** der Kern (5;5') und/oder das Füllmaterial aus einem druckbelastbaren, porösen, vorzugsweise offenporigen Material mit niedriger Wärmeleitfähigkeit besteht, insbesondere aus einem Pulver, einem Schaum oder aus Glasfasern, und/oder aus einem Trocknungsmittel, und/oder aus einem Gettermaterial, und/oder aus einem Fasermaterial, vorzugsweise aus einem anorganischen Fasermaterial, insbesondere aus einem Fasermaterial mit einer Wärmeleitfähigkeit von 3 mW/(m*K) oder weniger, wie beispielsweise aus Mineralwolle, Steinwolle, Basaltfaser oder Glasfaser.

10. Folienumhüllte Vakuumdämmplatte (1;1') nach einem der Ansprüche 8 oder 9, **dadurch gekennzeichnet, dass** das Füllmaterial (5;5') innerhalb der inneren Folie (10;10') eine andere Zusammensetzung aufweist als das Füllmaterial (13;13') in dem Zwischenraum zwischen der inneren und der äußeren Folie (6,10;6',10').

11. Folienumhüllte Vakuumdämmplatte (1;1') nach einem der vorhergehenden Ansprüche, **dadurch gekennzeichnet, dass** innerhalb der inneren Folie (10;10') wenigstens ein Getter zum Binden von Gasmolekülen vorgesehen ist, bspw. eine Verbindung aus einem Metall wie Aluminium, Barium, Titan oder Zirkonium mit einem Gas wie Sauerstoff, Stickstoff oder Wasserstoff.

12. Folienumhüllte Vakuumdämmplatte (1;1') nach einem der vorhergehenden Ansprüche, **dadurch gekennzeichnet, dass** die innere Folie (10;10') als luftdichte Barrierefolie ausgebildet ist, beispielsweise als Mehrschichtfolie mit wenigstens einer Lage aus einem Ethen-Vinylalkohol-Copolymer, bevorzugt metallisiert, insbesondere mit einem Stoffmengenanteil des Ethens von 40 mol-% oder weniger, vorzugsweise mit einem Stoffmengenanteil des Ethens von 35 mol-% oder weniger, insbesondere mit einem Stoffmengenanteil des Ethens von 30 mol-% oder weniger.

13. Folienumhüllte Vakuumdämmplatte (1;1') nach einem der vorhergehenden Ansprüche, **dadurch gekennzeichnet, dass** die äußere Folie

a) bei Standardbedingungen (23 °C, relative Luftfeuchtigkeit 50 %) eine Wasserdampfdurchlässigkeit von 10 g/(m$^2$*a) oder weniger aufweist, beispielsweise von von 5 g/(m$^2$*a) oder weniger, vorzugsweise von 2 g/(m$^2$*a)

oder weniger, insbesondere von 1 g/(m$^2$*a) oder weniger, und/oder

b) als luft- und/oder dampfdichte Barrierefolie ausgebildet ist, beispielsweise als Mehrschichtfolie mit wenigstens einer Lage aus einem Ethen-Vinylalkohol-Copolymer, bevorzugt metallisiert, insbesondere mit einem Stoffmengenanteil des Ethens von 30 mol-% oder mehr, vorzugsweise mit einem Stoffmengenanteil des Ethens von 35 mol-% oder mehr, insbesondere mit einem Stoffmengenanteil des Ethens von 40 mol-% oder mehr, und/oder

c) zumindest teilweise aus Aluminium besteht und/oder mit wenigstens einer Aluminiumfolie belegt ist, und/oder

d) an zwei einander gegenüber liegenden Flächen mit einer Aluminium-Lage versehen ist, insbesondere mit einer Aluminiumfolie belegt ist.

**14.** Folienumhüllte Vakuumdämmplatte (1;1') nach einem der vorhergehenden Ansprüche,
**dadurch gekennzeichnet, dass**

a) die äußere Folie (6;6') ausschließlich mit sich selbst versiegelt ist, jedoch nicht mit der inneren Folie (10;10'), und/oder dass

b) die innere Folie (10;10') ausschließlich mit sich selbst versiegelt ist, jedoch nicht mit der äußeren Folie (6;6').

**15.** Folienumhüllte Vakuumdämmplatte (1;1') nach einem der vorhergehenden Ansprüche,
**dadurch gekennzeichnet, dass** die innere Folie (10;10') vollständig an den inneren Kern (5;5') herangefaltet ist, wobei vorzugsweise an jeder Ecke des inneren Kerns (5;5') fünf Faltungslinien der inneren Folie (10;10') zusammenlaufen.


## Claims

**1.** A film-coated vacuum insulation panel (1; 1') comprising at least one inner core, at least one outer film which encloses the core, comprising

a) an inner film (10; 10'), which

a1) is situated between the inner core (5; 5') and the outer film (6; 6'), and

a2) includes at least one ply made of an ethene-vinyl alcohol copolymer, preferably metallized, in particular having a permeation value of 0.003 cm$^3$/(m$^2$ * d) or less under standard conditions (23°C, 50% external relative humidity),

a3) wherein the inner film and/or the outer film (6, 10; 6', 10') is designed as an air-tight barrier film;

b) a shell material (13; 13'), which

b1) raises the outer film (6; 6') from the inner foil (10;10') at least in areas, preferably on all sides, and

b2) comprises a drying agent, which

b21) is present with a surface density of at least 100 g/m$^2$ relative to the base area of the vacuum insulation panel (1; 1'),

b22) is comprised in the filler material (13; 13') in the interspace between the inner film and the outer film (6, 10; 6', 10'), in a volume ratio of drying agent to pressure-resistant, porous material of 1 : 2 or greater, and

b23) comprises, at a temperature T = 23°C and a vapor pressure p of at least 1% of the saturation vapor pressure $p_{sat}$: $p > 0.01 * p_{sat}$, a water vapor absorption capacity, based on the drying agent's own dry weight or, respectively, the drying agent's own dry mass $m_{TM}$, of $q_{max} = m_{H2O,max}/m_{TM}$ of 0.05 or greater: $q_{max} = m_{H2O,max}/m_{TM} \geq 0.05$.

**2.** The film-coated vacuum insulation panel (1; 1') according to claim 1, **characterized in that** at a temperature T = 23°C, the drying, relative to the drying agent's own dry weight or the drying agent's own dry mass $m_{TM}$, has a maximum water vapor absorption capacity $q_{max} = m_{H2O,max}/m_{TM}$ of 0.1 or greater: $q_{max} = m_{H2O,max}/m_{TM} \geq 0.1$; for example, a maximum water vapor absorption capacity $q_{max} = m_{H2O,max}/m_{TM}$ of 0.2 or greater: $q_{max} = m_{H2O,max}/m_{TM} \geq 0.2$; preferably a maximum water vapor absorption capacity $q_{max} = m_{H2O,max}/m_{TM}$ of 0.3 or greater: $q_{max} = m_{H2O,max}/m_{TM} \geq 0.3$; in particular a maximum water vapor absorption capacity $q_{max} = m_{H2O,max}/m_{TM}$ of 0.4 or greater: $q_{max} = m_{H2O,max}/m_{TM} \geq 0.4$.

3. The film-coated vacuum insulation panel (1; 1') according to one of the preceding claims, **characterized in that** the change in volume or swelling of the drying agent in the interspace between the inner film and the outer film (6, 10; 6', 10') at a maximum water absorption below 50% humidity is 5% or less, preferably 2% or less, in particular 1% or less, relative to the dry state.

4. The film-coated vacuum insulation panel (1; 1') according to one of the preceding claims, **characterized by** a cellulose-free drying agent, and/or by zeolite and/or calcium oxide as the drying agent.

5. The film-coated vacuum insulation panel (1; 1') according to one of the preceding claims, **characterized in that**

   a) in the filler material (13; 13') in the interspace between the inner film and the outer film (6, 10; 6', 10'), the volume ratio of drying agent to pressure-resistant, porous material is 1 : 1 or greater, for example 2 : 1 or greater, optionally 3 : 1 or greater, preferably 5 : 1 or greater, more preferably 7 : 1 or greater, in particular 9 : 1 or greater. and/or **in that**
   b) in the filler material (5; 5') within the inner film (10; 10'), the volume ratio of drying agent to pressure-resistant, porous material is 1 : 1 or less, generally 1 : 2 or less, for example 1 : 3 or less, optionally 1 : 4 or less, preferably 1 : 5 or less, more preferably 1 : 7 or less, in particular 1 : 10 or less.

6. The film-coated vacuum insulation' panel (1; 1') according to one of the preceding claims, **characterized in that** the space within the inner film (10; 10') is evacuated to a residual pressure ($p_1$), generally to a residual pressure ($p_1$) of 5 mbar or less, optionally to a residual pressure ($p_1$) of 2 mbar or less, for example to a residual pressure ($p_1$) of 1 rribar or less, preferably to a residual pressure ($p_1$) of 0.5 mbar or less, more preferably to a residual pressure ($p_1$) of 0.2 mbar or less, in particular to a residual pressure ($p_1$) of 0.1 mbar or less.

7. The film-coated vacuum insulation panel (1; 1') according to one of the preceding claims, **characterized in that** the space between the inner film and the outer film (6, 10; 6', 10') is evacuated to a residual pressure ($p_2$), generally to a residual pressure ($p_2$) of 100 mbar or less, optionally to a residual pressure ($p_2$) of 50 mbar or less, for example to a residual pressure ($p_2$) of 20 mbar or less, preferably to a residual pressure ($p_2$) of 10 mbar or less, more preferably to a residual pressure ($p_2$) of 5 mbar or less, in particular to a residual pressure ($p_2$) of 2 mbar or less.

8. The film-coated vacuum insulation panel (1; 1') according to one of the preceding claims, **characterized in that** the space within the inner film (10; 10') is evacuated to a lower residual pressure ($p_1$) than the residual pressure ($p_2$) in the space between the outer film and the inner film (6, 10; 6', 10'):

$$p_1 < p_2,$$

and/or **in that** the space between the outer film and the inner film (6, 10; 6', 10') is evacuated to approximately the same residual pressure ($p_2$) as the residual pressure ($p_1$) in the space within the inner film (10; 10'): $|\Delta p| = |p_1 - p_2| \leq 10$ mbar, preferably: $|\Delta p| = |p_1 - p_2| \leq 5$ mbar, preferably: $|\Delta p| = |p_1 - p_2| \leq 2$ mbar, in particular: $|\Delta p| = |p_1 - p_2| \leq 1$ mbar.

9. The film-coated vacuum insulation panel (1; 1') according to one of the preceding claims, **characterized in that** the core (5; 5') and/or the filler material is/are made of a pressure-resistant, porous, preferably open-pore material having low thermal conductivity, especially of a powder, a foam, or glass fibers, and/or a drying agent and/or a getter material, and/or of a fiber material, preferably an inorganic fiber material, in particular a fiber material having a thermal conductivity of 3 mW/(m * K) or less, for example mineral wool, rock wool, basalt fiber, or glass fiber.

10. The film-coated vacuum insulation panel (1; 1') according to one of claims 8 or 9, **characterized in that** the filler material (5; 5') within the inner film (10; 10') has a different composition than the filler material (13; 13') in the interspace between the inner film and the outer film (6, 10; 6', 10').

11. The film-coated vacuum insulation panel (1; 1') according to one of the preceding claims, **characterized in that** at least one getter is provided within the inner film (10; 10') for binding gas molecules, for example a compound composed of a metal such as aluminum, barium, titanium, or zirconium with a gas such as oxygen, nitrogen, or hydrogen.

12. The film-coated vacuum insulation panel (1; 1') according to one of the preceding claims, **characterized in that** the inner film (10; 10') is designed as an air-tight barrier film, for example as a multilayer film with at least one ply made of an ethene-vinyl alcohol copolymer, preferably metallized, in particular with a material portion of the ethene of 40 mol-% or less, preferably with a material portion of the ethene of 35 mol-% or less, in particular with a material portion of the ethene of 30 mol-% or less.

13. The film-coated vacuum insulation panel (1; 1') according to one of the preceding claims, **characterized in that** the outer film (6; 6')

   a) has a water vapor permeability of 10 g/(m$^2$ * a) or less, for example 5 g/(m$^2$ * a)) or less, preferably 2 g/(m$^2$ * a) or less, in particular 1 g/(m$^2$ * a) or less, at standard conditions (23°C, 50% relative humidity), and/or
   b) is designed as an air- and/or vapor-tight barrier film, for example as a multilayer film with at least one ply made of an ethene-vinyl alcohol copolymer, preferably metallized, in particular with a material portion of the ethene of 30 mol-% or greater, preferably with a material portion of the ethene of 35 mol-% or greater, in particular with a material portion of the ethene of 40 mol-% or greater, and/or
   c) is made, at least partially, of aluminum or is at covered with at least one aluminum film, and/or
   d) is provided with an aluminum ply, in particular is covered with an aluminum film, on two oppositely situated surfaces.

14. The film-coated vacuum insulation panel (1; 1') according to one of the preceding claims, **characterized in that**

   a) the outer film (6; 6') is sealed only to itself, but not to the inner film (10; 10'), and/or **in that**
   b) the inner film (10; 10') is sealed only to itself, but not to the outer film (6; 6').

15. The film-coated vacuum insulation panel (1; 1') according to one of the preceding claims, **characterized in that** the inner film (10; 10') is completely folded onto the inner core (5; 5'), wherein preferably five fold lines of the inner film (10;10') converge at each corner of the inner core (5; 5').


**Revendications**

1. Panneau isolant sous vide (1;1') entouré d'un film avec au moins un noyau interne, au moins un film extérieur entourant ce même noyau,
   Présentant:

   a) Un film interne (10;10'), lequel

      a1) se situe entre le noyau interne (5;5') et le film externe (6;6') et
      a2) comprend au moins une couche à base de copolymère d'éthylène et d'alcool vinylique, de préférence métallisée, en particulier avec une valeur de perméation sous conditions standard (23°C, humidité relative extérieure 50 %) de 0,003 cm$^3$/m$^2$*d) ou moins
      a3) dans lequel le film interne et/ou externe (6,10 ; 6',10') a été formé comme film barrière hermétique à l'air;

   b) Un matériau d'enveloppe (13;13'), lequel

      b1) décolle le film externe (6;6') du film interne (10;10') au moins localement, de préférence sur tous les côtés et
      b2) présente un agent de séchage, lequel

         b21) est disponible en une densité de surface d'au moins 100 g/m$^2$ par rapport à la surface de basé du panneau isolant sous vide (1;1').
         b22) est, dans le matériau de remplissage (13;13') dans l'espace entre le film interne et le film externe (6,10 ; 6',10'), le ratio volumique de l'agent de séchage par rapport au matériau résistant à la pression et poreux 1 : 2 ou au-dessus, et
         b23) relève, par une température T = 23°C ainsi qu'à partir d'une pression de vapeur p de 1 % de la pression de vapeur saturante $p_{sätt}$ p > 0,01 * $p_{sätt}$, d'une capacité d'absorption de la vapeur d'eau $q_{max}$ = $m_{H2O,max}$/$m_{TM}$ de 0,05 ou plus : $q_{max}$ = $m_{H2O,max}$/$m_{TM}$ ≥ 0,05 par rapport à son propre poids sec voire à sa propre masse sèche $m_{TM}$,

2. Panneau isolant sous vide entouré d'un film (1;1') selon la revendication 1, **caractérisé en ce que** l'agent de séchage présente, par une température T = 23°C, une capacité d'absorption maximale de la vapeur d'eau $q_{max} = m_{H2O,max}/m_{TM}$ de 0,1 ou plus : $q_{max} = m_{H2O,max}/m_{TM} \geq 0,1$ par rapport à son propre poids sec voire à sa propre masse sèche $m_{TM}$; à titre d'exemple une capacité d'absorption maximale de la vapeur d'eau $q_{max} = m_{H2O,max}/m_{TM}$ de 0,2 ou plus : $q_{max} = m_{H2O,max}/m_{TM} \geq 0,2$ ; de préférence une capacité d'absorption maximale de la vapeur d'eau $q_{max} = m_{H2O,max}/m_{TM}$ de 0,3 ou plus : $q_{max} = m_{H2O,max}/m_{TM} \geq 0,3$ ; en particulier une capacité d'absorption maximale de la vapeur d'eau $q_{max} = m_{H2O,max}/m_{TM}$ de 0,4 ou plus : $q_{max} = m_{H2O,max}/m_{TM} \geq 0,4$.

3. Panneau isolant sous vidé entouré d'un film (1;1') selon l'une des revendications précédentes, **caractérisé en ce que** la variation de volume ou le gonflement de l'agent de séchage, dans l'espace entre le film interne et le film externe (6,10 ;6', 10') en cas d'absorption d'eau maximale inférieure à 50 % d'humidité de l'air, est de 5 % ou moins, par rapport à l'état sec, de préférence de 2 % ou moins, en particulier de 1 % ou moins.

4. Panneau isolant sous vide entouré d'un film (1;1') selon l'une des revendications précédentes, **caractérisé par** un agent de séchage exempt de cellulose, et/ou par de la zéolithe et/ou par de l'oxyde de calcium comme agent de séchage.

5. Panneau isolant sous vide entouré d'un film (1;1')selon l'une des revendications précédentes, **caractérisé en ce que**

   a) dans le matériau de remplissage (13;13') dans l'espace entre le film interne et le film externe (6,10 ; 6',10'), le ratio volumique de l'agent de séchage par rapport au matériau résistant à la pression et poreux est de 1:1 ou au-dessus, à titre d'exemple de 2 : 1 ou au-dessus, le cas échéant de 3 : 1 ou au-dessus, préférablement de 5 : 1 ou au-dessus, de préférence de 7 : 1 ou au-dessus, en particulier de 9 : 1 ou au-dessus, et/ou que
   b) dans le matériau de remplissage (5;5') à l'intérieur du film interne (10 ;10'), le ratio volumique de l'agent de séchage par rapport au matériau résistant à la pression et poreux est de 1 : 1 ou en dessous, en général de 1 : 2 ou en dessous, à titre d'exemple de 1 : 3 ou en dessous, le cas échéant de 1 : 4 ou en dessous, préférablement de 1 : 5 ou en dessous, de préférence de 1 : 7 ou en dessous, en particulier de 1 : 10 ou en dessous.

6. Panneau isolant sous vide entouré d'un film (1;1') selon l'une des revendications précédentes, **caractérisé en ce que** l'espace à l'intérieur du film interne (10 ;10,') est évacué à une pression résiduelle ($p_1$), en général à une pression résiduelle ($p_1$) de 5 mbar ou moins, le cas échéant à une pression résiduelle ($p_1$) de 2 mbar ou moins, à titre d'exemple à une pression résiduelle ($p_1$) de 1 mbar ou moins, préférablement à une pression résiduelle ($p_1$) de 0,5 mbar ou moins, de préférence à une pression résiduelle ($p_1$) de 0,2 mbar ou moins, en particulier à une pression résiduelle ($p_1$) de 0,1 mbar ou moins.

7. Panneau isolant sous vide entouré d'un film (1 ;1') selon l'une des revendications précédentes, **caractérisé en ce que** l'espace entre le film interne et le film externe (6,10; 6',10') est évacué à une pression résiduelle ($p_2$), en général à une pression résiduelle ($p_2$) de 100 mbar ou moins, le cas échéant à une pression résiduelle ($p_2$) de 50 mbar ou moins, à titre d'exemple à une pression résiduelle ($p_2$) de 20 mbar ou moins, préférablement à une pression résiduelle ($p_2$) de 10 mbar ou moins, de préférence à une pression résiduelle ($p_1$) de 5 mbar ou moins, en particulier à une pression résiduelle ($p_2$) de 2 mbar ou moins.

8. Panneau isolant sous vide entouré d'un film (1;1') selon l'une des revendications précédentes, **caractérisé en ce que** l'espace à l'intérieur du film interne (10; 10') est évacué à une pression résiduelle plus basse ($p_1$) que la pression résiduelle ($p_2$) dans l'espace entre le film interne et le film externe (6,10 ; 6',10') :

$$P_1 < p_2$$

et/ou que l'espace entre le film externe et le film interne (6,10; 6',10') est évacué env. à la même pression résiduelle ($p_2$) que la pression résiduelle ($p_1$) dans l'espace à l'intérieur du film interne (10;10') : $|\Delta p| = |p_1 - p_2| \leq 10$ mbar, privilégié à : $|\Delta p| = |p_1 - p_2| \leq 5$ mbar, de préférence à : $|\Delta p| = |p_1 - p_2| \leq 2$ mbar, en particulier à : $|\Delta p| = |p_1 - p_2| \leq 1$ mbar

9. Panneau isolant sous vide entouré d'un film (1;1') selon l'une des revendications précédentes, **caractérisé en ce que** le noyau (5;5') et/ou le matériau de remplissage en matériau résistant à la pression et poreux, est composé de préférence de matériau à pores ouverts avec une conductibilité thermique basse, en particulier à base de poudre, de mousse ou de fibre de verre, et/ou d'un agent de séchage, et/ou d'un matériau de sorption, et/ou d'un matériau en fibre, de préférence en matériau en fibre anorganique, en particulier en matériau en fibre avec une conductibilité thermique de 3 mW/(m*K) ou moins, comme par exemple en laine minérale, laine de roche, fibre de basalte ou fibre de verre.

10. Panneau isolant sous vide entouré d'un film (1;1') selon l'une des revendications 8 ou 9, **caractérisé en ce que** le matériau de remplissage (5;5') à l'intérieur du film interne (10;10') présente une autre composition que le matériau de remplissage (13;13') dans l'espace entre le film interne et le film externe (6,10; 6',10').

11. Panneau isolant sous vide entouré d'un film (1;1') selon l'une des revendications précédentes, **caractérisé en ce que** à l'intérieur du film interne (10;10') est prévu au moins un piège à gaz pour la liaison des molécules de gaz, par ex. un composé de métal comme l'aluminium, le baryum, le titane ou le zirconium avec un corps gazeux comme l'oxygène, l'azote ou l'hydrogène.

12. Panneau isolant sous vide entouré d'un film (1;1') selon l'une des revendications précédentes, **caractérisé en ce que** le film interne (10 ; 10') a été formé comme film barrière hermétique à l'air, par exemple comme film multicouches avec au moins une couche à base de copolymère d'éthylène et d'alcool vinylique, de préférence métallisée, en particulier avec une fraction molaire d'éthylène de 40 % ou moins, de préférence avec une fraction molaire d'éthylène de 35 % ou moins, en particulier avec une fraction molaire d'éthylène de 30 % ou moins.

13. Panneau isolant sous vide entouré d'un film (1;1') selon l'une des revendications précédentes, **caractérisé en ce que** le film externe

a) présente par des conditions standard (23°C, humidité relative 50 %) une perméabilité à la vapeur d'eau de 10 g/(m$^2$*a) ou moins, par exemple de 5 g/(m$^2$*a) ou moins, de préférence de 2 g/(m$^2$*a) ou moins, en particulier de 1 g/(m$^2$*a) ou moins,
et/ou
b) est formé comme film barrière hermétique à l'air et /ou à la vapeur, par exemple comme film multicouches avec au moins une couche à base de copolymère d'éthylène et d'alcool vinylique, de préférence métallisée, en particulier avec une fraction molaire d'éthylène de 30 % ou plus, de préférence avec une fraction molaire d'éthylène de 35 % ou plus, en particulier avec une fraction molaire d'éthylène de 40 % ou plus, et/ou
c) comprend au moins partiellement de l'aluminium et/ou est garni avec au moins un film en aluminium, et/ou
d) est pourvu sur les deux faces opposées l'une à l'autre d'une couche en aluminium, est garni en particulier avec un film en aluminium.

14. Panneau isolant sous vide entouré d'un film (1;1') selon l'une des revendications précédentes, **caractérisé en ce que**

a) le film externe (6;6') est exclusivement soudé à lui-même, et non pas au film interne (10;10') et/ou que
b) le film interne (10;10') est exclusivement soudé à lui-même, et non pas au film externe (6;6').

15. Panneau isolant sous vide entouré d'un film (1;1') selon l'une des revendications précédentes, **caractérisé en ce que** le film interne (10;10') est entièrement plissé sur le noyau interne (5;5'), où de préférence sur chaque angle du noyau interne (5;5') convergent cinq lignes de pliage du film interne (10;10').

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2011241988 B

- WO 03002828 A1